# EUROPÄISCHE PATENTSCHRIFT

(11) **EP 1 284 600 B1**
(45) Veröffentlichungstag und Bekanntmachung des Hinweises auf die Patenterteilung: **13.09.2006**
(21) Anmeldenummer: 01925281.6
(22) Anmeldetag: 16.02.2001
(51) Int. Cl.: A01M 3/02

(54) **INSEKTENVERNICHTUNGSGERÄT**
INSECT EXTERMINATION DEVICE
APPAREIL POUR TUER LES INSECTES

(30) Priorität: 20.05.2000 DE 20009135 U
(43) Veröffentlichungstag der Anmeldung: 26.02.2003
(73) Patentinhaber: Heller, Alfred, 52062 Aachen (DE)
(72) Erfinder: Heller, Alfred, 52062 Aachen (DE)
(74) Vertreter: Priesmeyer, Thomas
(86) Internationale Anmeldenummer: PCT/DE2001/000604
(87) Internationale Veröffentlichungsnummer: WO 2001/089296

(56) Entgegenhaltungen:
- DE-C- 257 897
- DE-U- 20 009 918
- US-A- 703 303
- US-A- 1 888 563
- US-A- 2 151 242

## Beschreibung

Die Erfindung bezieht sich auf ein Insektenvernichtungsgerät.

Zur Insektenbekämpfung bzw. -vernichtung stehen verschiedene Mittel zur Verfügung, die jedoch alle gewisse Nachteile aufweisen.

Chemische Insektenvernichtungsmittel wirken gut, sind aber schwierig in der Anwendung, teuer und weisen gesundheitliche Risiken auf.

Elektrische Insektenvernichtungsgeräte benötigen naturgemäß einen nicht überall verfügbaren elektrischen Anschluß, sind relativ groß und teuer in Anschaffung und Unterhalt.

Weiter bekannt sind statische Insektenvernichtungsgeräte wie z. B. selbstklebende Girlanden. Diese sind wegen der anhaftenden Insektenkadaver nach einiger Zeit aus ästethischen und hygienischen Gründen abzulehnen.

Ein relativ einfaches Mittel sind sogenannte Fliegenklatschen, die einen Griff und ein daran befestigtes, flexibles und gelöchertes Plastikblatt aufweisen. Meistens sind sie vollständig aus einem farbigen Kunststoff ausgebildet. Beim Einsatz dieser Geräte werden die Insekten jedoch meist schon durch den entstehenden Luftzug zur Flucht veranlaßt. Teilweise lassen sie sich in bestimmten Fällen gar nicht einsetzen, da sie für manche Raumsituationen (Ecken, hochgelegene Wände, Zimmerdecken) nicht geeignet sind. Sitzen die Insekten auf Personen, kommt der Einsatz auch nicht in Frage, da dies mit schmerzhaften Erfahrungen verbunden wäre.

Der Erfindung liegt damit das Problem zugrunde, unter Vermeidung der aus dem Stand der Technik bekannten Nachteile ein Insektenvernichtungsgerät anzugeben, welches einen Höchstgrad an Effizienz und Anwendbarkeit aufweist, leicht zu handhaben und zu reinigen und kostengünstig herzustellen ist.

Dieses Problem wird mit den im Patentanspruch 1 aufgeführten Merkmalen in überraschend einfacher Weise gelöst.

Die Anordnung des an der Grundplatte angeordneten stielförmigen Griffes, dessen Längsachse die Ebene der Grundplatte durchstößt, erlaubt es, in Richtung der Längsachse des Gerätes eine Kraft auszuüben. Hierdurch wird es ermöglicht, mit dem Gerät nicht das Insekt durch Schlagen zu töten, sondem durch gezieltes Heranführen und Zerdrücken. Die zu vernichtenden Insekten werden also nicht durch eine schnelle, einen Luftzug erzeugende Bewegung vor der drohenden Gefahr gewarnt, da das Gerät langsam an das Insekt herangeführt werden kann, ohne dass ein Luftzug entsteht.

Die Grundplatte des Gerätes ist so groß gewählt, dass, selbst wenn das Insekt noch durch eine unbedachte Bewegung gewarnt wird, es nicht mehr schnell genug aus dem tödlichen Aktionsradius des Geräts entfliehen kann. Ein langsames Herantasten an das Insekt ist erforderiich und führt auch dazu, dass es - selbst beim Einsatz zum Töten von Insekten, die sich auf Personen aufhalten - nicht zu schmerzhaften Verletzungen kommt.

Vorteilhafte Ausgestaltungen der Erfindung sind Gegenstand der Unteransprüche.

Der stielförmige Griff kann, je nach fertigungstechnischen Gegebenheiten, an der Grundplatte angeformt oder mit dieser einstückig ausgebildet ist.

Bevorzugt ist es, wenn der stielförmige Griff an der Grundplatte lösbar befestigt ist. Hierdurch kann das Gerät nun schnell in seine Einzelteile zerlegt werden und findet somit auch z. B. in einer Reisetasche oder einem Koffer Platz.

Wenn der stielförmige Griff mittels eines Kupplungsstückes wie eines Pfropfens od. dgl. an der Grundplatte befestigt wird, ist außerdem noch eine kosten- und produktionsgünstige Art der Verbindung gegeben.

Besonders vorteilhaft ist es weiter, wenn das Kupplungsstück als Gelenk ausgebildet ist, welches in verschiedenen Winkeln einstellbar oder einrastbar ist. Dies führt dazu, dass das Gerät nun auch in Situationen eingesetzt werden kann, in denen es zuvor durch seine Starrheit versagt hätte. So hat man jetzt keine Probleme mehr ein Insekt zu töten, welches in relativ großer Höhe auf einer vertikalen Wand sitzt, da man einfach nur den Winkel etwas anpassen muss.

Vorteilhaft ist es weiter, wenn die Grundplatte mindestens eine Ecke, vorzugsweise eine rechtwinklige Ecke aufweist. Besonders bevorzugt sind auch die Ausführungsformen, bei denen die Grundplatte rechteckig, vor allem quadratisch ausgebildet ist. Diese Ausführungsformen haben den entscheidenden Vorteil, dass das Gerät in jede Raumecke kommt.

Wenn der stielförmige Griff verlängerbar ausgebildet ist, liegt eine weitere bevorzugte Ausführungsform vor. So ist es nun kein Problem mehr, Insekten zu töten, die sich z. B. in Altbauten auf hohen Zimmerdecken aufhalten. Der Griff kann teleskopartig ausgefahren werden oder mittels Verlängerungsstücken erweitert werden.

Um das Gerät jederzeit in einem optisch ansprechenden und hygienisch einwandfreien Zustand zu halten ist es bevorzugt, wenn es aus einem abwaschbaren, waschbaren oder sogar spülmaschinenfesten Material ausgebildet ist.

Eine ganz besonders bevorzugte Ausführungsform liegt vor, wenn das Insektenvernichtungsgerät aus einem transparenten oder durchscheinenden Werkstoff, insbesondere aus transparentem Kunststoff wie Polyethylen (PE), Polyethylenmethacrylat (PMMA, Acrylglas, Plexiglas), Polycarbonat (PC) od. dgl. besteht. Hierdurch wird der Einsatzerfolg des Gerätes nochmals wesentlich gesteigert. Zum einen werden die Insekten nicht mehr gewarnt, da sie die Gefahr (aufgrund fehlender optischer Reize, da unsichtbar) nicht mehr wahrnehmen, zum anderen ist das Fixieren des Insektes durch die jeweilige Person nun stark erleichtert, da ein ständiger visueller Kontakt aufgrund der Durchsichtigkeit des Materials gewährleistet ist.

Schließlich sieht eine Ausführungsform vor, dass mehrere untereinander austauschbare Grundplatten verschiedener Größen und/oder Formen und/oder Materialien vorgesehen sind. Hierdurch können für verschiedene Einsatzzwecke optimierte Grundplatten wechselweise verwendet werden.

Die Erfindung wird nachstehend anhand eines bevorzugten Ausführungsbeispiels und mit Bezug auf die beigefügten Zeichnungsfiguren näher erläutert, die Folgendes zeigen:
- Figur 1: zeigt in perspektivischer Ansicht eine bevorzugte Ausführungsform des Insektenvernichtungsgeräts;
- Figur 2: zeigt das Detail Grundplatte des Geräts aus Figur 1 in perspektivischer Ansicht;
- Figur 3: zeigt das Detail Grundplatte des Geräts aus Figur 1 in Aufsicht;
- Figur 4a: zeigt das Detail Grundplatte des Geräts aus Figur 1 in Seitenansicht; und
- Figur 4b: zeigt das Detail Grundplatte des Geräts aus Figur 1 in weiterer Seitenansicht.

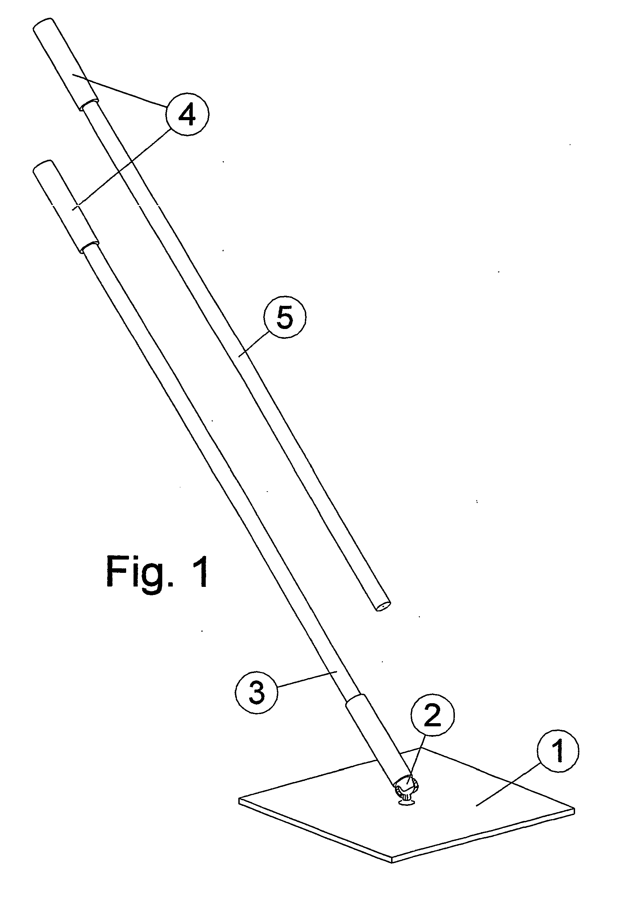

In der Figur 1 sieht man ein Insektenvernichtungsgerät in der bevorzugten Plexiglas-Ausführung mit Gelenk und Verlängerungsstücken zur Grifferweiterung.

Die quadratische, transparente Plexiglas-Grundplatte 1 ist über ein Plexiglas-Gelenk 2 mit dem Plexiglas-Griff 3 verbunden. Das Gelenk 2 ist so ausgebildet, dass es mit geringem Kraftaufwand in verschiedenen Winkelstellungen eingestellt werden kann. Dies kann in Raststufen oder wie hier dargestellt stufenlos erfolgen. Über die Hülse 4 kann der Plexiglas-Griff 3 unter Gebrauch eines Verlängerungsstückes 5, das in die Hülse 4 eingesteckt wird, erweitert werden.

Alle Teile sind auseinander zu nehmen, so dass einem Transport in z.B. einer Tasche oder einem Reisekoffer nichts im Wege steht.

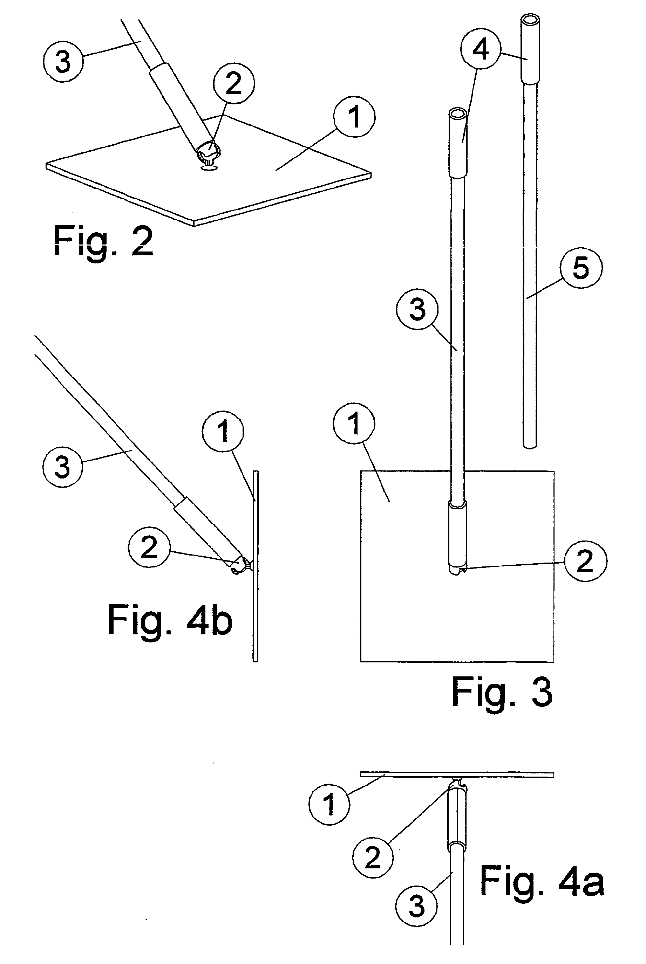

In den Figuren 2 - 4b sieht man, zwecks besserer Sichtbarkeit und größerer Verständlichkeit, noch einmal Details und verschiedene Ansichten des Gerätes, wobei gleiche Teile mit gleichen Bezugsziffern versehen sind.

### BEZUGSZIFFERNLISTE

- 1: Grundplatte
- 2: Gelenk
- 3: Griff
- 4: Hülse
- 5: Griffverlängerung

## Patentansprüche

1. lnsektenvernichtungsgerät bestehend aus einer Grundplatte und einem an der Grundplatte angeordneten stielförmigen Griff (3), dessen Längsachse die Ebene der Grundplatte durchstößt, ***dadurch gekennzeichnet, dass*** das Insektenvernichtungsgerät aus einem transparenten oder durchscheinenden Werkstoff besteht.

2. Insektenvernichtungsgerät nach Anspruch 1, **dadurch gekennzeichnet, dass** der stielförmige Griff an der Grundplatte angeformt oder mit dieser einstückig ausgebildet ist.

3. lnsektenvernichtungsgerät nach Anspruch 1, **dadurch gekennzeichnet, dass** der stielförmige Griff an der Grundplatte lösbar befestigt ist.

4. Insektenvernichtungsgerät nach Anspruch 3, **dadurch gekennzeichnet, dass** der stielförmige Griff mittels eines Kupplungsstückes wie eines Pfropfens od. dgl. an der Grundplatte befestigt ist.

5. Insektenvernichtungsgerät nach Anspruch 4, **dadurch gekennzeichnet, dass** das Kupplungsstück als Gelenk (2) ausgebildet ist, welches in verschiedenen Winkeln einstellbar oder einrastbar ist.

6. Insektenvernichtungsgerät nach einem oder mehreren der vorhergehenden Ansprüche, **dadurch gekennzeichnet, dass** die Grundplatte zumindest eine Ecke aufweist.

7. Insektenvernichtungsgerät nach Anspruch 6, **dadurch gekennzeichnet, dass** die Grundplatte zumindest eine rechtwinklige Ecke aufweist.

8. lnsektenvernichtungsgerät nach Anspruch 7, **dadurch gekennzeichnet, dass** die Grundplatte rechteckig ausgebildet ist.

9. Insektenvernichtungsgerät nach Anspruch 8, **dadurch gekennzeichnet, dass** die Grundplatte (1) quadratisch ausgebildet ist.

10. Insektenvernichtungsgerät nach Anspruch 6, **dadurch gekennzeichnet, dass** die Grundplatte (1) polygonal ausgebildet ist.

11. Insektenvernichtungsgerät nach einem oder mehreren der vorhergehenden Ansprüche, **dadurch gekennzeichnet, dass** der stielförmige Griff (3) verlängerbar ausgebildet ist.

12. Insektenvernichtungsgerät nach Anspruch 11, **dadurch gekennzeichnet, dass** der stielförmige Griff mittels Verlängerungstücken (4, 5) verlängerbar ausgebildet ist.

13. Insektenvernichtungsgerät nach Anspruch 11, **dadurch gekennzeichnet, dass** der stielförmige Griff teleskopartig verlängerbar ausgebildet ist.

14. Insektenvernichtungsgerät nach einem oder mehreren der vorhergehenden Ansprüche, **dadurch gekennzeichnet, dass** es aus einem abwaschbaren, waschbaren oder spülmaschinenfesten Material ausgebildet ist.

15. Insektenvernichtungsgerät nach einem oder mehreren der vorhergehenden Ansprüche, **dadurch gekennzeichnet, dass** es aus transparentem Kunststoff wie Polyethylen (PE), Polyethylenmethacrylat (PMMA, Acrylglas, Plexiglas), Polycarbonat (PC) od. dgl. besteht.

16. Insektenvernichtungsgerät nach einem oder mehreren der vorhergehenden Ansprüche, **dadurch gekennzeichnet, dass** es mehrere untereinander austauschbare Grundplatten verschiedener Größen und/oder Formen und/oder Materialien umfaßt.

## Claims

1. An insect extermination apparatus consisting of a base plate and a shaft-shaped handle (3) arranged at the base plate, with the longitudinal axis of the handle extending through the plane of the base plate, **characterized in that** the insect extermination apparatus consists of a transparent or translucent material.

2. An insect extermination apparatus in accordance with claim 1, **characterized in that** the shaft-shaped handle is attached to the base plate by means of a molded joint or is developed with said base plate as one single piece.

3. An insect extermination apparatus in accordance with claim 1, **characterized in that** the shaft-shaped handle is attached to the base plate such that it can be detached from it.

4. An insect extermination apparatus in accordance with claim 3, **characterized in that** the shaft-shaped handle is attached to the base plate by means of a coupling piece such as a plug or something similar.

5. An insect extermination apparatus in accordance with claim 4, **characterized in that** the coupling piece is developed as a joint (2) that is adjustable at various angles or can be locked into place.

6. An insect extermination apparatus in accordance with one or several of the preceding claims, **characterized in that** the base plate has at least one corner.

7. An insect extermination apparatus in accordance with claim 6, **characterized in that** the base plate has at least one right-angled corner.

8. An insect extermination apparatus in accordance with claim 7, **characterized in that** the base plate is developed as a rectangle.

9. An insect extermination apparatus in accordance with claim 8, **characterized in that** the base plate (1) is developed as a square.

10. An insect extermination apparatus in accordance with claim 6, **characterized in that** the base plate (1) is developed as a polygon.

11. An insect extermination apparatus in accordance with one or several of the preceding claims, **characterized in that** the shaft-shaped handle (3) is developed so that it is extendable.

12. An insect extermination apparatus in accordance with claim 11, **characterized in that** the shaft-shaped handle is developed so that it is extendable by means of extension pieces (4,5).

13. An insect extermination apparatus in accordance with claim 11, **characterized in that** the shaft-shaped handle is developed so that it is extendable like a telescope.

14. An insect extermination apparatus in accordance with one or several of the preceding claims, **characterized in that** it is developed from a material that can be washed off, is washable or can be cleaned in a dishwasher.

15. An insect extermination apparatus in accordance with one or several of the preceding claims, **characterized in that** it consists of a transparent material such as polyethylene (PE), polyethylene methacrylate (PMMA, Lucite, Plexiglas), polycarbonate (PC) or something similar.

16. An insect extermination apparatus in accordance with one or several of the preceding claims, **characterized in that** it is comprised of several interchangeable base plates of various sizes and/or forms and/or materials.

## Revendications

1. Instrument pour détruire les insectes composé d'une plaque de base et d'un manche en forme de barre (3) disposé sur la plaque de base, dont l'axe longitudinal traverse le plan de la plaque de base, **caractérisé en ce que** l'instrument pour détruire les insectes est composé d'un matériau transparent ou translucide.

2. Instrument pour détruire les insectes selon la revendication 1, **caractérisé en ce que** le manche en forme de barre est formé sur la plaque de base ou réalisé d'un seul tenant avec celle-ci.

3. Instrument pour détruire les insectes selon la revendication 1, **caractérisé en ce que** le manche en forme de barre est fixé de manière amovible sur la plaque de base.

4. Instrument pour détruire les insectes selon la revendication 3, **caractérisé en ce que** le manche en forme de barre est fixé à la plaque de base au moyen d'un élément de raccordement tel qu'un goujon ou similaire.

5. Instrument pour détruire les insectes selon la revendication 4, **caractérisé en ce que** l'élément de raccordement est conformé comme une articulation (2) qui peut être ajustée ou emboîtée sous différents angles.

6. Instrument pour détruire les insectes selon une ou plusieurs des revendications précédentes, **caractérisé en ce que** la plaque de base possède au moins un coin.

7. Instrument pour détruire les insectes selon la revendication 6, **caractérisé en ce que** la plaque de base possède au moins un coin à angle droit.

8. Instrument pour détruire les insectes selon la revendication 7, **caractérisé en ce que** la plaque de base est de forme rectangulaire.

9. Instrument pour détruire les insectes selon la revendication 8, **caractérisé en ce que** la plaque de base (1) est de forme carrée.

10. Instrument pour détruire les insectes selon la revendication 6, **caractérisé en ce que** la plaque de base (1) est de forme polygonale.

11. Instrument pour détruire les insectes selon une ou plusieurs des revendications précédentes, **caractérisé en ce que** le manche en forme de barre (3) peut être allongé.

12. Instrument pour détruire les insectes selon la revendication 11, **caractérisé en ce que** le manche en forme de barre peut être allongé au moyen d'éléments de rallonge (4, 5).

13. Instrument pour détruire les insectes selon la revendication 11, **caractérisé en ce que** le manche en forme de barre peut être allongé de manière télescopique.

14. Instrument pour détruire les insectes selon une ou plusieurs des revendications précédentes, **caractérisé en ce qu'**il est fait d'un matériau pouvant être nettoyé, lavé ou lavé en machine.

15. Instrument pour détruire les insectes selon une ou plusieurs des revendications précédentes, **caractérisé en ce qu'**il est fait d'un matériau transparent ou translucide, en particulier de plastique transparent tel que du polyéthylène (PE), du méthacrylate de polyéthylène (PMMA, verre acrylique, Plexiglas), de polycarbonate (PC) ou similaire.

16. Instrument pour détruire les insectes selon une ou plusieurs des revendications précédentes, **caractérisé en ce qu'**il comporte plusieurs plaques de base de taille et/ou de forme et/ou de matériau différents.
